# EUROPÄISCHE PATENTSCHRIFT

(11) **EP 2 493 761 B1**
(45) Veröffentlichungstag und Bekanntmachung des Hinweises auf die Patenterteilung: **30.05.2018**
(21) Anmeldenummer: 10771083.2
(22) Anmeldetag: 20.10.2010
(51) Int. Cl.: B64D 11/00

(54) **STAUFACHMODUL MIT BEWEGLICHEM STAUFACH**
STORAGE COMPARTMENT MODULE WITH MOBILE STORAGE COMPARTMENT
MODULE COMPARTIMENT DE RANGEMENT DOTÉ D'UN COMPARTIMENT DE RANGEMENT MOBILE

(30) Priorität: 30.10.2009 DE 102009051363; 30.10.2009 US 280165 P
(43) Veröffentlichungstag der Anmeldung: 05.09.2012
(73) Patentinhaber: Airbus Operations GmbH, 21129 Hamburg (DE)
(72) Erfinder: SCHNEIDER, Uwe, 21635 Jork (DE); GERBER, Thorsten, 22309 Hamburg (DE)
(74) Vertreter: LKGLOBAL Lorenz & Kopf PartG mbB Patentanwälte
(86) Internationale Anmeldenummer: PCT/EP2010/065799
(87) Internationale Veröffentlichungsnummer: WO 2011/051149

(56) Entgegenhaltungen:
- EP-A1- 1 216 920
- EP-A1- 1 293 383
- EP-A2- 0 861 781
- EP-A2- 1 116 651
- DE-A1-102007 030 331
- US-A1- 2007 095 980

## Beschreibung

Die vorliegende Anmeldung beansprucht die Priorität der US Provisional Patentanmeldung Nr. 61/280,165, eingereicht am 30. Oktober 2009 und der deutschen Patentanmeldung Nr. 10 2009 051 363.9, eingereicht am 30. Oktober 2009.

### GEBIET DER ERFINDUNG

Die Erfindung betrifft ein Hatrack bzw. ein Staufachmodul sowie ein Verfahren zur Installation desselben. Insbesondere betrifft die Erfindung ein Staufachmodul mit Staufach. Außerdem betrifft die Erfindung die Verwendung eines Staufachmoduls in einem Flugzeug oder Fahrzeug sowie ein Flugzeug mit einem Staufachmodul.

### HINTERGRUND DER ERFINDUNG

Derzeit sind für Passagierflugzeuge der A320-Klasse keine beweglichen lateralen Staufächer bekannt. Dies ist ursächlich darauf zurückzuführen, dass die Platzverhältnisse der jeweiligen Querschnitte keine großzügigen Arrangements mit Schwenkbereichen erlauben. Um ein ausreichendes Schwenken eines Staufachs um die Flugzeug-X-Achse zu erlauben, müsste bei einem einfach gelagerten Staufach der Flugzeugrumpf aufgebrochen werden. Dies bedeutet, dass der Flugzeugrumpf von seiner idealen kreisrunden Form allzu sehr abweichen müsste. Einfache drehbar gelagerte Staufächer sind bekannt aus der A380 und der A350. Aufgrund der größeren Rumpfdurchmesser tritt hier das Problem des erforderlichen Schwenkbereichs nicht in den Vordergrund, allerdings liegt hier zum Teil der Drehpunkt so weit fern vom Schwerpunkt, dass Handkräfte und Ergonomie eingeschränkt sind.
Außerdem beginnt der derzeitige Installationsablauf von Passenger Service Units im Anschluss an die Staufach-Montage mit dem Einklinken der rumpfseitigen Verschlüsse in den sogenannten PSC-Schienen, wobei diese dann mit den Funktionspaneelen die elektrischen Stecker und Luftanschlüsse verbunden werden, welche in der Regel an der Unterseite der Hatracks oder direkt an der Struktur des Flugzeugs gehalten sind.

In der DE 10 2007 030331 A1 sowie der WO 2009 003945 A1 ist ein Staufachmodul beschrieben für einen Innenraum eines Flugzeugs, wobei das Staufachmodul mindestens einen Behälter und mindestens ein Gehäuse zur Aufnahme des Behälters aufweist, und wobei in das Gehäuse mindestens ein Passagier-Versorgungskanal integriert ist.

Die EP 1 216 920 A1 beschreibt eine Gepäckablage mit einem absenkbaren Gepäckfach, wobei ein Führungssystem des Gepäckfachs zwischen Seitenwänden eines Flugzeugstrukturteils und Seitenwänden des Gepäckfachs angeordnet ist. Das Führungssystem besteht aus zusammenwirkenden Nuten und Führungsbolzen, wobei eine vordere und eine hintere Nut derart ausgebildet sind, dass sie Kreisabschnitte mit einem gemeinsamen Kreismittelpunkt bilden.

Die US 2007/0095980 A1 beschreibt ein um eine Achse schwenkbares Staufach mit speziellen Einrichtungen zur Aufnahme von Gepäckstücken.

Aus der EP 0 861 781 A2 sind Vorrichtungen bekannt, zum befestigen eines Gepäckfachs an einer tragenden Struktur eines Flugzeugrumpfes.

Die EP 1 293 383 A1 beschreibt ein unbeweglich an einer tragenden Struktur befestigtes Staufach mit einer Öffnungsklappe, die mittels einer Kurvenführung einerseits nach oben schwenkbar und andererseits nach hinten verschiebbar an einem Gehäuse des Staufachs angebracht ist.

EP 1 116 651 offenbart ein absenkbares Gepäckfach mit einer motorbetriebenen Antriebseinrichtung, die eingerichtet ist, das Gepäcksfach entlang einer Führungsschiene an jeder Seite zu bewegen. An jeder der zwei Seiten des Gepäckfachs sind vier Rollen mittels einer Lasche angebracht.

### ZUSAMMENFASSUNG DER ERFINDUNG

Es ist eine Aufgabe der Erfindung, ein Staufachmodul bereitzustellen, welches leichter zu montieren ist. Ferner ist es eine Aufgabe der Erfindung eine leichtere Bedienung eines Staufachs eines Staufachmoduls zu ermöglichen.
Diese und weitere Aufgaben werden durch den Gegenstand der jeweiligen unabhängigen Ansprüche erfüllt. Weitere Ausführungsformen sind in den jeweiligen abhängigen Ansprüchen beschrieben.

Im Allgemeinen weist ein Staufachmodul gemäß der Erfindung ein Gehäuse mit einem Staufach-Aufhahmeraum und ein Staufach mit seitlich angeordneten Führungselementen auf, wobei an den Seitenwänden des Staufach-Aufnahmeraums jeweils eine Führungsschiene angeordnet ist, und wobei die Führungselemente des Staufachs in Eingriff mit den Führungselementen an dem Gehäuse bringbar sind. Hierbei können die Führungselemente, die an den jeweiligen Seiten des Staufachs vorgesehen sind, in eine einzige Führungsschiene pro Seite des Staufach-Aufnahmeraums eingreifen.

Das Staufach kann zwischen einer geöffneten und einer geschlossenen Position entlang der Führungsschienen derart bewegt werden, dass zumindest abschnittsweise keine äußere Kraft notwendig ist, um das Staufach zu bewegen. Mit anderen Worten kann die von einem Passagier eines Flugzeugs aufgewendete Handkraft zur Betätigung des Staufachs im Laufe des Bewegungsweges des Staufachs durch die Gewichtskraft des Staufachs, inklusive der in dem Staufach befindlichen Gegenstände, reduziert oder sogar aufgehoben werden. Ein Passagier kann somit den Eindruck gewinnen, zum Teil gar keine Kraft zu benötigen, um das Staufach zu öffnen oder auch zu schließen. Das Bedienen des Staufachs wird somit wesentlich erleichtert.

Gemäß einer weiteren Ausführungsform der Erfindung weist jede Führungsschiene ein erstes Führungssegment, ein Verbindungssegment, ein zweites Führungssegment und ein Montagesegment auf.

Im eingebauten Zustand kann gemäß einer weiteren Ausführungsform der Erfindung auf jeder Seite des Staufachs eine erste Rolle an dem Staufach in ein erstes Führungssegment der korrespondierenden Führungsschiene eingreifen, und eine zweite Rolle an dem Staufach in ein zweites Führungssegment dieser Führungsschiene eingreifen.

Mit anderen Worten wird die Bewegung des Staufachs zwischen einer offenen und einer geschlossenen Position mittels eines Kurvengetriebes realisiert, welches über zwei Rollen und eine einzige korrespondierende Schiene gestaltet ist.

Der Umstand, dass auf jeder Seite des Staufachs nur eine einzige Führungsschiene vorgesehen ist, welche zum Passagierraum eines Flugzeugs hin offen ist, hat den Vorteil, dass im Anschluss an die Befestigung des Gehäuses des Staufachmoduls an einer Flugzeugwand sowie im Anschluss an das Einsetzen einer PSUs in den optional vorgesehenen Passagier-Versorgungskanal ein Staufach zum Beispiel mittels Einführung der an den Staufachseiten befindlichen Rollen in die korrespondierenden Führungsschienen des Gehäuses montierbar ist. Hierbei können sogenannte Einführschrägen an den Führungsschienen eine Ein-Mann-Montage des Staufachs unterstützen.

Für den Fall eines Staufachs mit beweglichem Drehpunkt, das eine platzsparende Bewegung zwischen zwei idealen Endpositionen ermöglicht, erlaubt das Staufachmodul gemäß einer Ausführungsform der Erfindung die Realisierung eines komplexen Verfahrwegs auf einer geschlossenen Schiene (eine pro Seite) mit jeweils zwei Lagerpunkten (kugelgelagerte Polyamidrollen). Da die Schienen an den Gehäuseseiten aus der jeweiligen Randfläche herausgeführt ausgebildet sein können, ist eine einfache Ein-Mann-Montage des rollengeführten Staufachs über Selbstfindung (Einführschrägen) an den Schienen möglich.

Der Verfahrweg beim Öffnen (erste Phase) kann so gewählt sein, dass der Drehpunkt zunächst fern des Schwerpunkts zur Strukturseite liegt, um ein garantiertes und schnelles selbsttätiges Öffnen des Staufachs zu gewährleisten, und kontinuierlich zum Schwerpunkt hinwandert. Der weitere Verfahrweg beim Öffnen kann so gewählt sein, dass der Drehpunkt sich dem Schwerpunkt kontinuierlich annähert, um eine weitere gravitationsbedingte Beschleunigung zu unterbinden.

Der weitere Verfahrweg beim Öffnen (zweite Phase) kann zu einem Drehpunktwechsel über den Schwerpunkt hinweg in Richtung Passagier führen. Hierbei wird die Geschwindigkeit des Staufachs abgebremst, um die kinetische Energie vor Erreichen der Endposition zu tilgen.

Der weitere Verfahrweg beim Öffnen (dritte Phase) kann nun so gewählt sein, dass der Drehpunkt zurück über den Schwerpunkt zur Strukturseite wandert, um eine sichere Lagerung der Schütte in voll geöffneter Endposition zu gewährleisten.

Beim Verschließen kann eben dieser Drehpunktwechsel, wahrnehmbar als Rückmeldung bzw. Widerstand, wieder überwunden werden. Nach Überwinden dieses Widerstands kann der Verfahrweg beim Schließen so gewählt sein, dass der Drehpunkt fern des Schwerpunkts auf Strukturseite wandert, das heißt, das Gewicht des Staufachs unterstützt den Passagier beim Überwinden der Masseträgheit. Der weitere Verfahrweg bis zum endgültigen Verschließen kann ferner so gewählt sein, dass nach Erreichen einer gewissen Bewegungsenergie durch die vorherige Beschleunigungsphase das endgültige Verschließen mit geringer Handkraft zu realisieren ist.

Gemäß einer weiteren Ausführungsform der Erfindung weist das Staufachmodul ferner einen Verschlussstopfen auf, welcher geeignet ist, ein Ende einer Führungsschiene zu verschließen, wobei die Verschlussstopfen korrespondierend zu etwaigen Einführschrägen an den Enden der Führungsschienen konische Verschlussstopfen sein können. Die Verschlussstopfen können ferner mittels Madenschrauben gehalten werden und können zugleich mit Gummidämpfern zur Anschlagsdämpfung ausgeführt sein.

Gemäß einer weiteren Ausführungsform der Erfindung weist das Staufachmodul ferner eine Verriegelung auf, so dass das Staufach in einer geschlossenen Stellung in dem Gehäuse arretierbar ist.

Gemäß einer weiteren Ausführungsform der Erfindung ist der Bewegungsweg des Staufachs mittels der Führungsschienen so bestimmt, dass während des Öffnens oder des Schließens des Staufachs, d.h. in jeder Position des Staufachs zwischen einer offenen und einer geschlossenen Position, ein im Wesentlichen konstanter Spalt zwischen einer Außenseite des Staufachs und einem Rand des Staufachgehäuses vorliegt. Auf diese Weise kann gewährleistet werden, dass in jeder Stellung des Staufachs relativ zum Staufachgehäuse ein gleichmäßiger optischer Übergang zwischen dem Staufach und dem Staufachgehäuse und auch den Innen-Verkleidungspaneelen gegeben ist. Ferner wird gewährleistet, dass die rückwärtig angeordneten Elemente und Strukturen des Staufachmoduls zu keiner Zeit sichtbar sind.

Das Staufach, das Staufachgehäuse und die Führungsschienen können auch so aufeinander abgestimmt sein, dass an allen Seiten des Staufachs, also an den seitlichen, der oberen und der unteren Außenseite, ein konstanter Spalt realisiert ist, sodass neben den optischen Aspekten auch eine Luftdämpfung der Bewegung des Staufachs bereitgestellt wird.

Das heißt, dass der Staufach-Aufnahmeraum ein Luftpuffer erzeugt, wenn das Staufach von einer geöffneten in eine geschlossene Position bewegt wird, da die hinter dem Staufach befindliche Luft nicht schnell genug durch den Spalt zwischen Staufach und Staufachgehäuse entweichen kann. Andererseits kann nicht schnell genug Luft in den Staufach-Aufnahmeraum einströmen, wenn das Staufach aus einer geschlossenen Position in eine geöffnete Position bewegt wird, sodass auch hierbei die Bewegung sanft gebremst bzw. gedämpft wird.

Gemäß einer weiteren Ausführungsform der Erfindung ist das Staufachmodul so gestaltet, dass es formschlüssig in das Lining des Innenraums eines Flugzeugs integrierbar ist.

Außerdem kann das Staufachmodul ferner einen Passagier-Versorgungskanal und zumindest ein Passagier-Versorgungselement aufweisen, wobei das zumindest eine Passagier-Versorgungselement eine Sauerstoff-Versorgungsbox, ein Lautsprecher, eine Kopfhörerbuchse, eine Leuchte, ein Luftauslass für Luftversorgung, eine USB-Buchse, eine Computerbuchse und/oder ein Verkleidungsteil sein kann.

Es wird angemerkt, dass Durchgriffsöffnungen in dem Gehäuse vorgesehen sein können, die eine weiter verbesserte Montage des Staufachmoduls und insbesondere der Passagier-Versorgungselemente (PSU) ermöglichen, wobei diese Öffnungen und auch Kabel und Schläuche der PSUs und deren Rückseite nach der Montage des Staufachs für einen Passagier nicht mehr zu sehen sind, wobei akustische Nachteile durch die geschlossene Kontur der Seitenverkleidung mit dem Passagier-Versorgungskanal, dem Staufachmodulgehäuse und dem Staufach zum Deckenlining nicht zu erwarten sind, und wobei Servicearbeiten an den PSUs lediglich den Ausbau des Staufachs erfordern, was von einer Person innerhalb von Sekunden erledigt werden kann.

Gemäß einem weiteren Aspekt der Erfindung weist ein Verfahren zur Installation eines Staufachmoduls wie oben beschrieben folgende Schritte auf: Befestigen des Gehäuses des Staufachmoduls an der Struktur des Flugzeugs, Einsetzen der ersten Rollen in die Montagesegmente der Führungsschienen, Einführen des Staufachs in den Staufach-Aufnahmeraum, wobei sich die ersten Rollen entlang der Führungsschienen bewegen, Einsetzen der zweiten Rollen in die Montagesegmente, und weiteres Einführen des Staufachs, bis die ersten Rollen in den ersten Führungssegmenten angeordnet sind und die zweiten Rollen in den zweiten Führungssegmenten angeordnet sind.

Es ist angemerkt, dass Ausführungsformen der Erfindung unter Bezugnahme auf unterschiedliche Gegenstände beschrieben sind. Insbesondere sind einige Ausführungsformen in Bezugnahme auf Verfahrens-Ansprüche beschrieben, wohingegen andere Ausführungsformen unter Bezugnahme auf Vorrichtungs-Ansprüche beschrieben sind. Jedoch wird ein Fachmann aus der vorangegangenen und der folgenden Beschreibung entnehmen, solange nicht anders festgestellt, dass zusätzlich zu jeder Kombination von Merkmalen, welche zu dem einen Typ von Gegenständen gehört, ebenfalls jede Kombination zwischen Merkmalen bezüglich der unterschiedlichen Gegenstände als hierin offenbart gelten.

Die oben beschriebenen Aspekte und weitere Aspekte, Merkmale und Vorteile der Erfindung können ebenfalls aus den Beispielen der Ausführungsformen entnommen werden, welche im Folgenden unter Bezugnahme auf die anhängenden Zeichnungen beschrieben werden.

### KURZE BESCHREIBUNG DER ZEICHNUNGEN

Figur 1 zeigt eine Explosionsdarstellung eines Staufachmoduls mit Gehäuse, PSUs und Staufach gemäß einer Ausführungsform der Erfindung.
Figur 2 zeigt eine isometrische Darstellung eines Staufachs vor der Montage in einem Gehäuse eines Staufachmoduls.
Figur 3 zeigt die Anordnung von Führungsrollen an einem Staufach in einer Führungsschiene.
Figur 4 zeigt eine schematische Darstellung, welche die Bewegungen des Staufachs zwischen der geschlossenen und der offenen Position zeigt.
Figur 5 ist eine isometrische Darstellung einer exemplarischen Führungsschiene.
Figur 6 illustriert die unterschiedlichen Phasen beim Öffnen eines Staufachs gemäß der Erfindung.
Figur 7 ist eine schematische Darstellung eines geschlossenen Staufachs.
Figur 8 ist eine schematische Darstellung eines teilweise geöffneten Staufachs.
Figur 9 ist eine schematische Darstellung eines geöffneten Staufachs.
Figur 10 ist ein Diagramm, welches den Zusammenhang zwischen dem Öffhungswinkel und der für eine weitere Bewegung notwendigen Kraft illustriert.
Figur 11 ist ein Diagramm, welches Schritte eines Verfahrens gemäß der Erfindung illustriert.

### DETAILLIERTE BESCHREIBUNG DER AUSFÜHRUNGSFORMEN

Im Gegensatz zu der sehr zeitaufwendigen und unergonomischen Installation eines kompletten Staufachmoduls mit anschließend zu installierendem Versorgungskanal (oder auch eines kompletten vorkonfigurierten Staufachmoduls) wird hier der Montageablauf nach den spezifischen Bedürfnissen einer Staufachmodul-Montage in einem beengten Flugzeugrumpf und die notwendige individuelle Bestückung des Versorgungskanals in zwei logische Arbeitsschritte gesplittet.

Durch die verbesserte Zugänglichkeit sind diese Arbeitsschritte erheblich beschleunigt und in Arbeit erleichternder Position zu erledigen. Beispielsweise muss für Servicearbeiten an den PSUs lediglich das Staufach ausgebaut werden, was von einer Person innerhalb weniger Sekunden erledigt werden kann.

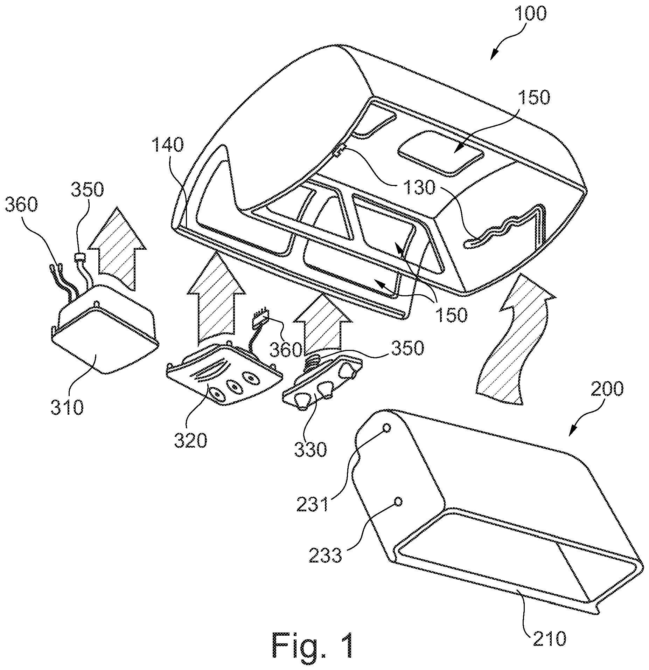

Figur 1 zeigt eine isometrische Explosionsdarstellung eines Staufachmoduls gemäß der Erfindung. Das hier dargestellte Staufachmodul weist einen integralen Versorgungskanal auf und besteht aus einem fixen (starren) Staufachmodul-Gehäuse 100, ausgeführt als Schubkastengehäuse (Sandwich) oder Trägergehäuse (Metall oder CFK) zur Aufnahme der Führungsschienen 130 für das Staufach, sowie zur Aufnahme der Passenger-Service-Channel (PSC)-Schienen 140 für die Passenger-Service-Units 310, 320, 330 (PSUs). Großzügige Durchgriffsöffhungen 150 zum Erreichen der Befestigungselemente für die Montage an der Flugzeugstruktur sollen das Montieren und Ausrichten des Gehäuses 100 erheblich erleichtern. Großzügige Durchgriffsöffnungen 150 im Gehäuse zum Versorgungskanal hin sollen ein einfaches und ergonomisches Verbinden der PSUs zu den Elektrik-, Sauerstoff- und Individual-Air-Anschlüssen in Augenhöhe ermöglichen.

Das Staufach 200 selbst stellt insbesondere mit seiner Wand 210 das Sichtteil zur Kabine hin dar und verdeckt im montierten Zustand alle Kabel und Schläuche der PSUs und deren Rückseite sowie die Kinematik (Führungsschienen und Rollen) durch entsprechende geometrische Auslegung. Das Staufach besteht aus einem Schubkastengehäuse (Sandwich) mit insgesamt vier Rollen 231, 233 zur Lagerung in den Führungsschienen 130 des Gehäuses. Die PSUs entsprechen funktional den gebräuchlichen in der Kabine verwendeten Bauteilen, jedoch mit dem Vorteil, dass weder klappbare Scharniere noch Kabel- oder Schlauchüberlängen mit entsprechenden Scheuerschutzhüllen und deren separater Halter zum Anwenden erforderlich sind.

Das beschriebene Staufach kombiniert die Realisierung eines komplexen Verfahrwegs auf einer geschlossenen Schiene (eine pro Seite) mit jeweils zwei Lagerpunkten (kugelgelagerte Polyamidrollen). Obwohl es sich hier um eine komplexe Bewegung des Staufachs handelt, wird eine maximale Reduzierung der Anzahl der Einzelteile durch Integration aller gewünschten Funktionen in die Formgebung eines einzigen Bauteils erreicht (Führungsschiene). Diese Führungsschiene selbst ist pro Staufachmodul in Flugzeuglängsrichtung versetzt zweimal vorhanden, jeweils als Fest- bzw. Los-Lager ausgeführt, was auch Gepäckablagen über mehrere Flugzeugspante ermöglicht. Da diese Führungsschienen an den Gehäuseseiten aus der Randfläche herausgeführt werden, ist eine einfache Ein-Mann-Montage der rollengeführten Staufächer über Selbstfindung (Einlaufschrägen) an den Schienen möglich.

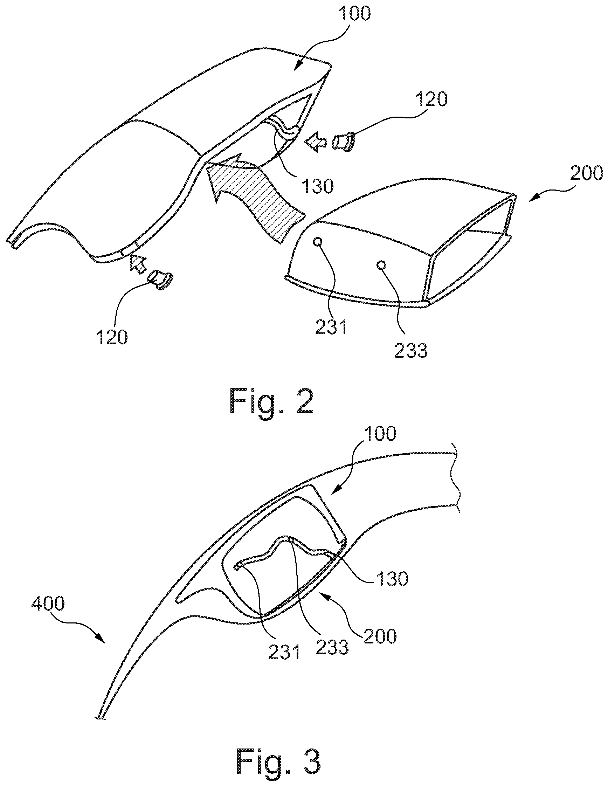

Wie in der isometrischen Darstellung in Figur 2 erkennbar, werden die Schienen 130 durch jeweils einen mit Fixierschrauben gehaltenen Verschluss- und Anschlagsstopfen 120 verschlossen, sobald die Führungsrollen 230 eines Staufachs 200 in die Führungsschienen 130 eingeführt sind.

Die Anschlagsstopfen können zur zusätzlichen Dämpfung und Endanschlag mit einem elastischen Puffer versehen sein. Da das Gehäuse getrennt von dem Staufach an der Flugzeugstruktur montiert werden kann, wird auch die Befestigung des Gehäuses durch zum Beispiel Montageöffnungen an der Rückwand wesentlich erleichtert. Diese Montageöffnungen sowie das gesamte Innenleben des Staufachmoduls sind nach der Montage des Staufachs, das auch als Sichtteil fungiert, blickgeschützt.

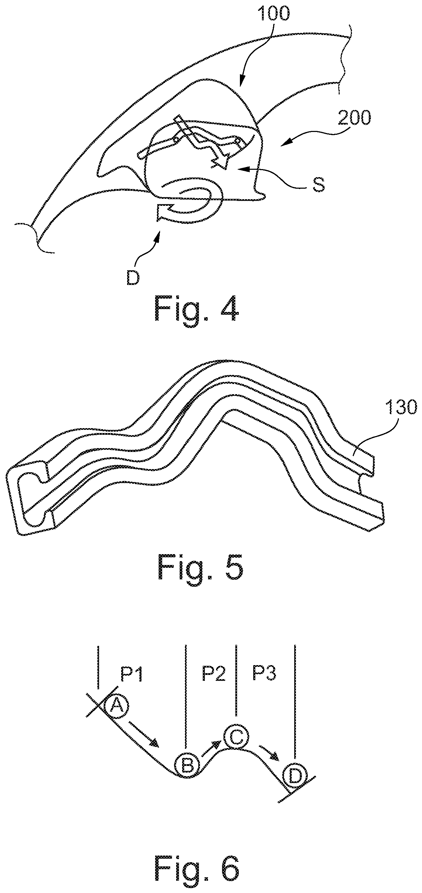

Die Führungsschiene 130 ist bezüglich der Endposition so ausgelegt, dass die geschlossene Endposition eine möglichst rumpfnahe Lage (siehe Figur 3), die geöffnete eine möglichst beladefreundliche Lage sind (siehe Figur 4). Das Konstrukt ist somit geeignet, die Schwenkbewegung optimal zu gestalten und Toträume (Schwenkbereiche) zu minimieren sowie eine möglichst großzügige Kabine in einem Flugzeug zu ermöglichen.

Besonderes Augenmerk des hier beschriebenen Staufachmoduls mit Einschub-Führungsschienen liegt hierbei aber auf dem definierten Kurvenverlauf (siehe Figur 5).

Der Verfahrweg beim Öffnen (siehe Phase P1 in Figur 6) ist so gewählt, dass der Drehpunkt zunächst fern des Schwerpunkts zur Strukturseite liegt, um ein garantiertes und schnelles selbsttätiges Öffnen des Staufachs zu gewährleisten, und kontinuierlich zum Schwenkpunkt hinwandert. Der weitere Verfahrweg beim Öffnen ist so gewählt, dass der Drehpunkt sich dem Schwerpunkt kontinuierlich annähert, um eine weitere gravitationsbedingte Beschleunigung zu unterbinden.

Der weitere Verfahrweg beim Öffnen (Phase P2 in Figur 6) führt zu einem Drehpunktwechsel über den Schwerpunkt hinweg in Richtung Passagier. Hierbei wird die Geschwindigkeit des Staufachs abgebremst, um die kinetische Energie vor Erreichen der Endposition zu tilgen.

Der weitere Verfahrweg beim Öffnen (Phase P3 in Figur 6) ist nun so gewählt, dass der Drehpunkt zurück über den Schwerpunkt der Strukturseite wandert, um eine sichere Lagerung des Staufachs in voll geöffneter Endposition zu gewährleisten.

Beim Verschließen muss eben dieser Drehpunktwechsel wahrnehmbar als Rückmeldung bzw. Widerstand wieder überwunden werden. Nach Überwinden dieses Widerstands ist der Verfahrweg beim Schließen so gewählt, dass der Drehpunkt fern des Schwerpunktes auf Strukturseite wandert, das heißt, das Gewicht des Staufachs unterstützt den Passagier beim Überwinden der Masseträgheit.

Der weitere Verfahrweg bis zur endgültigen geschlossenen Position ist ferner so gewählt, dass nach Erreichen einer gewissen Bewegungsenergie durch die vorherige Beschleunigungsphase das endgültige Verschließen mit geringer Handkraft zu realisieren ist. Durch Nutzung der kinetischen Energie bleiben die erforderlichen Handkräfte somit in einem angenehmen Rahmen. Der physikalische Effekt, der hier nutzbar gemacht wird, erklärt sich im Wesentlichen durch ein definiertes Wechselspiel zwischen potentieller und kinetischer Energie (siehe Figur 6).

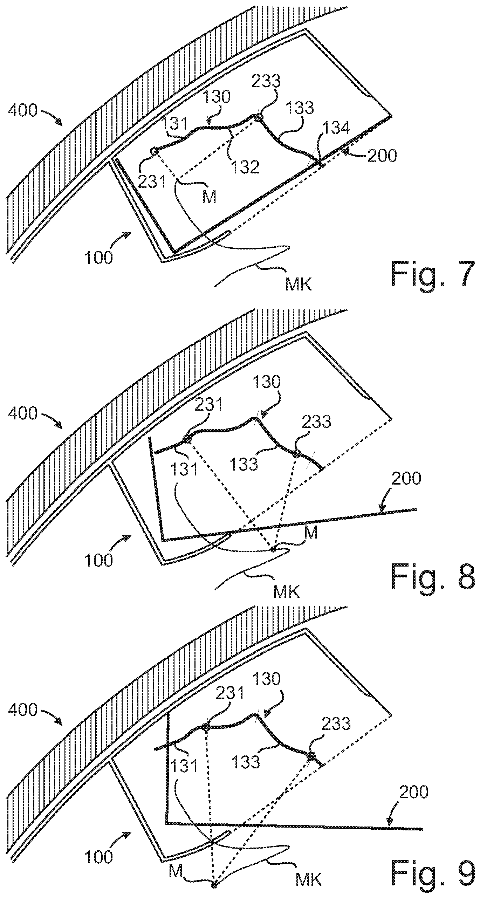

Die oben beschriebenen Aspekte der Bewegung des Staufachs sind in den Figuren 7 bis 9 auf eine andere Weise dargestellt. In Figur 7, 8 und 9 ist jeweils ein Teil der Struktur 400 dargestellt, an welcher das Gehäuse 100 des Staufachmoduls befestigt ist. Ferner ist eine Führungsschiene 130 zu sehen, welche aus den folgenden Segmenten zusammengesetzt ist: ein erstes Führungssegment 131, in welches eine erste Rolle 231 eines Staufachs 200 eingreifen kann, ein Verbindungssegment 132, durch welches die erste Rolle 231 hindurch läuft, wenn das Staufach 200 montiert bzw. eingebaut wird, ein zweites Führungssegment 133, durch welches die erste Rolle 231 bei der Montage hindurch läuft und in welches eine zweite Rolle 233 des Staufachs 200 eingreifen kann, und schließlich ein Montagesegment 134, welches nach vorne offen ausgebildet ist, sodass die erste und anschließend die zweite Rolle bei der Montage in die Führungsschiene 130 eingeführt werden kann.

Die Figur 7 zeigt das Staufach in geschlossener Stellung. Die Figur 8 zeigt das Staufach in teilweise geöffneter Stellung. Die Figur 9 zeigt das Staufach in vollständig geöffneter Stellung. Ferner ist in den Figuren die Momentanpolkurve MK sowie der Momentanpol M der jeweiligen Stellung eingezeichnet. Auf diese Weise wird verdeutlicht, dass der tatsächliche Drehpunkt einer bestimmten Stellung oder Position des Staufachs im Laufe der Bewegung des Staufachs zwischen der geschlossenen und der geöffneten Position entlang der Momentanpolkurve MK wandert. Die Form der Momentanpolkurve MK illustriert, dass während der Bewegung des Staufachs eine veränderte Kippbewegung realisiert wird.

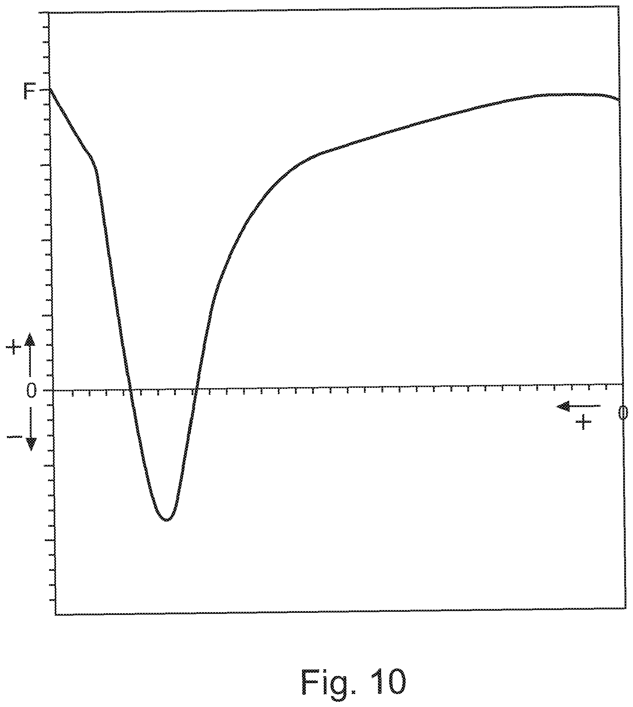

Diese veränderte Kippbewegung hat zur Folge, dass die aufzuwendende Kraft, das heißt die Handkraft, je nach Stellung des Staufachs variiert. In Figur 10 ist ein exemplarischer Verlauf der Kraft F über dem Öffnungswinkel α dargestellt. In dem dargestellten Beispiel wird die zur Betätigung des Staufachs notendige Kraft sogar in einem Abschnitt negativ. In diesem Abschnitt bewegt sich damit das Staufach eigenständig, ohne dass von außen eine Kraft anliegen muss. Je nach tatsächlicher Geometrie des Staufachs und insbesondere je nach Beladung oder Befüllung des Staufachs mit Gegenständen, wird sich die Kurve verändern bzw. verschieben. Qualitativ wird die Kraft allerdings in jedem Fall abschnittsweise geringer, sodass die Betätigung des Staufachs, d.h. ein Öffnen bzw. ein Schließen des Staufachs, erleichtert wird.

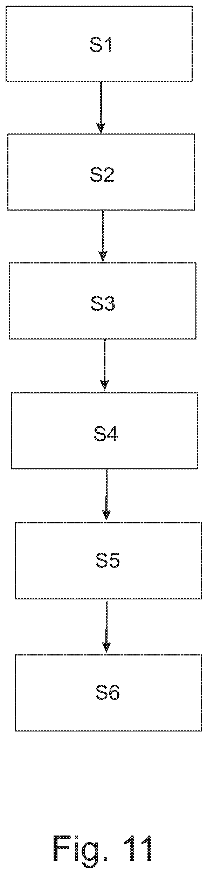

Figur 11 zeigt ein Flussdiagramm, in welchem schematisch die Schritte eines Verfahrens zur Installation eines Staufachs gemäß der Erfindung dargestellt sind. Es wird angemerkt, dass die Schritte des Verfahrens lediglich Haupt-Schritte sind, wobei diese Haupt-Schritte in Unter-Schritte differenziert oder unterteilt werden können. Außerdem können ebenfalls Unter-Schritte zwischen den Haupt-Schritten vorgenommen werden. Ein Unter-Schritt wird nur dann als solcher erwähnt, wenn dieser Schritt wichtig für das Verständnis der Prinzipien des Verfahrens gemäß der Erfindung ist.

Im Einzelnen sind folgende Schritte wesentlich:
In Schritt S1 wird das Gehäuse des Staufachs an der Struktur eines Flugzeugs befestigt. In Schritt S2werden die ersten Rollen, die jeweils an einer Seite des Staufachs angeordnet sind, in die Montagesegmente der Führungsschienen eingesetzt bzw. eingeführt. In Schritt S3 wird das Staufach so in das Gehäuse des Staufachmoduls eingeschoben, dass die ersten Rollen entlang des Montagesegments, entlang des zweiten Führungssegments und bis in das Verbindungssegment laufen. In Schritt S4 werden dann die zweiten Rollen in die Montagesegmente eingeführt. Schließlich wird das Staufach weiter in das Gehäuse hineingeschoben, wobei die ersten Rollen schließlich in die ersten Führungssegmente eingreifen und die zweiten Rollen in die zweiten Führungssegmente. Als zusätzlicher, möglicher Schritt S6 können die offenen Enden der Montagesegmente mittels Verschlussstopfen verschlossen werden.

Zusammenfassend wird festgestellt, dass, obwohl es sich um eine komplexe Bewegung des Staufachs handelt, eine maximale Bauteilreduktion und eine Gewichtsersparnis realisiert wird, bei gleichzeitiger Integration wesentlicher gewünschter Effekte. Damit ermöglicht die Verwendung zweier Schienen, vierer Lagerrollen eine optimale Ergonomie, einen geringen Platzbedarf, eine einfache Installation, eine dynamische Dämpfung beim Öffnen sowie eine dynamische Handkraft-Unterstützung beim Schließen.

Hinsichtlich der Montage ermöglicht die Gestaltung des Staufachmoduls ein Splitten des Moduls in zwei Bauteile, nämlich das Gehäuse und das Staufach, welche für eine Montage optimiert getrennt werden. Montage und Serviceprobleme, welche bei der herkömmlichen Bauweise auftreten, werden auf diese Weise beseitigt. Die Montage des Gehäuses ist durch die frontale Erreichbarkeit der Befestigungs- und Einstellelemente stark vereinfacht. Die PSUs müssen nicht klappbar ausgeführt werden und sind fix montiert, bevor sie mit den Versorgungsleitungen in der Flugzeugstruktur verbunden werden.

Darüber hinaus bleibt die Variabilität und Flexibilität des Versorgungskanals erhalten, Testroutinen des Versorgungskanals bleiben erhalten, Toleranzprobleme des Versorgungskanals in Flugzeugrichtung (Strukturtoleranzen) können durch Toleranzpaneele gelöst werden, geschlossene Konturen von der Seitenverkleidung, dem PSC, dem Staufachgehäuse und dem Staufach zum Deckenlining sind möglich, und schließlich ist auch ein griffloses Design aufgrund der schwerkraftbedingten Selbstöffnung des Staufachs möglich (Entriegelung über push-to-open).

Während die Erfindung illustriert und beschrieben wurde im Detail in den Zeichnungen und der vorangegangenen Beschreibung, ist es beabsichtigt, dass derartige Illustrationen und Beschreibungen lediglich illustrativ oder exemplarisch und nicht restriktiv sind, so dass die Erfindung nicht durch die offenbarten Ausführungsformen beschränkt ist.

Andere Variationen der offenbarten Ausführungsform können durch einen Fachmann beim Umsetzen der beanspruchten Erfindung verstanden und bewirkt werden, aus einem Studium der Zeichnungen, der Offenbarung und der anhängenden Ansprüche. In den Ansprüchen schließt das Wort "aufweisend" nicht andere Elemente oder Schritte aus, und der unbestimmte Artikel "ein" schließt eine Mehrzahl nicht aus.

Alleinig der Umstand, dass bestimmte Merkmale in verschiedenen abhängigen Ansprüchen genannt sind, beschränkt nicht den Gegenstand der Erfindung. Auch beliebige Kombination dieser Merkmale können vorteilhaft eingesetzt werden. Die Bezugszeichen in den Ansprüchen sollen nicht den Umfang der Ansprüche beschränken.

### BEZUGSZEICHENLISTE

- 100: Gehäuse des Staufachmoduls
- 110: Befestigungselement
- 120: Verschlussstopfen
- 130: Lagerungselement
- 131: erstes Führungssegment
- 132: Verbindungssegment
- 133: zweites Führungssegment
- 134: Montagesegment
- 140: Befestigungsschiene
- 150: Durchgriffsöffnung
- 160: Passagier-Versorgungskanal
- 170: Verschlussplatte
- 180: Staufach-Aufnahmeraum
- 190: Ventil
- 195: Einstellschraube
- 200: Staufach
- 210: Staufachwand
- 231: erstes Führungselement
- 233: zweites Führungssegment
- 240: Lagerungselement
- 300: Passagier-Versorgungselement (PSU)
- 310, 320, 330: unterschiedliche PSUs
- 350, 360: Anschlüsse
- 400: Flugzeugstruktur
- 410: Befestigungselement
- 420: Außenwand
- 430: Innenverkleidung
- 450, 460: Versorgungsleitungen
- S: Bewegung des Schwerpunktes
- D: Bewegung des individuellen Drehpunktes
- M: Momentanpol
- MK: Momentanpolkurve
- U: Unterdruckreservoir
- L: Luftfluss
- F: Kraft
- α: Öffnungswinkel
- P1, P2, P3: Bewegungsphasen

## Patentansprüche

1. Staufachmodul aufweisend:
ein Gehäuse (100) mit einem Staufach-Aufnahmeraum (180), wobei an den zwei Seitenwänden des Staufach-Aufnahmeraums jeweils eine Führungsschiene (130) angeordnet ist, und
ein Staufach (200) mit zwei Seiten und an diesen Seiten angeordneten Führungselementen (231, 233), wobei die Führungselemente erste Rollen (231) und
zweite Rollen (233) aufweisen, wobei an jeder der zwei Seiten des Staufachs eine erste Rolle und eine zweite Rolle angeordnet sind, welche in Eingriff mit einer der Führungsschienen (130) bringbar sind,
wobei die Führungsschienen jeweils derart ausgebildet sind, dass das Staufach zwischen einer geöffneten und einer geschlossenen Position entlang der Führungsschiene bewegbar ist und dass eine von einem Passagier aufgewendete Handkraft zur Betätigung des Staufachs im Laufe des Bewegungsweges des Staufachs durch die Gewichtskraft des Staufachs reduziert wird.

2. Staufachmodul nach Anspruch 1, wobei das Staufach (200) zwischen einer geöffneten und einer geschlossenen Position entlang der Führungsschienen (130) zumindest abschnittsweise allein aufgrund der eigenen Gewichtskraft bewegbar ist.

3. Staufachmodul nach Anspruch 1, wobei jede Führungsschiene (130) ein erstes Führungssegment (131) zum Führen der ersten Rolle, ein zweites Führungssegment (133) zum Führen der zweiten Rolle, ein Verbindungssegment (132) zwischen dem ersten Führungssegment und dem zweiten Führungssegment und ein Montagesegment (134) zum Einsetzten der Rollen in die Führungsschiene aufweist.

4. Staufachmodul nach Anspruch 3, wobei die ersten Rollen (231) so angeordnet sind, dass sie in die ersten Führungssegmente (131) eingreifen, und die zweiten Rollen (233) so angeordnet sind, dass sie in die zweiten Führungssegmente (133) eingreifen, wenn das Staufach (200) in das Gehäuse (100) eingebaut ist.

5. Staufachmodul nach Anspruch 1, welches ferner einen Verschlussstopfen (120) aufweist, welcher geeignet ist, ein Ende einer Führungsschiene (130) zu verschließen.

6. Staufachmodul nach Anspruch 1, welches ferner eine Verriegelung aufweist, so dass das Staufach (200) in einer geschlossenen Stellung in dem Gehäuse (100) arretierbar ist.

7. Staufachmodul nach Anspruch 1, wobei der Bewegungsweg des Staufachs (200) so bestimmt ist, dass in jeder Position des Staufachs zwischen einer offenen und einer geschlossenen Position, ein im Wesentlichen konstanter Spalt zwischen einer Außenseite (210) des Staufachs und einem Rand des Gehäuses (100) gebildet wird.

8. Staufachmodul nach Anspruch 1, wobei das Staufachmodul formschlüssig in das Lining des Innenraums eines Flugzeugs integrierbar ist.

9. Staufachmodul nach Anspruch 1, welches ferner einen Passagier-Versorgungskanal (160) und zumindest ein Passagier-Versorgungselement (300) aufweist, wobei das zumindest eine Passagier-Versorgungselement (300) ein Element aus der Gruppe ist, die umfasst: Sauerstoff-Versorgungsbox, Lautsprecher, Kopfhörerbuchse, Leuchte, Luftauslass für Luftversorgung, USB-Buchse, Computerbuchse und Verkleidungsteil.

10. Verwendung eines Staufachmoduls nach einem der Ansprüche 1 bis 9 in einem Flugzeug oder Fahrzeug.

11. Flugzeug mit einem Staufachmodul nach einem Ansprüche 1 bis 9.

12. Verfahren zur Installation eines Staufachmoduls nach einem der Ansprüche 3 bis 9 in einem Flugzeug, wobei das Verfahren die Schritte aufweist:
- Befestigen des Gehäuses (100) des Staufachmoduls an der Struktur (400) des Flugzeugs,
- Einsetzen der ersten Rollen (231) in die Montagesegmente (134) der Führungsschienen (130),
- Einführen des Staufachs (200) in den Staufach-Aufnahmeraum (180), wobei sich die ersten Rollen (231) entlang der Führungsschienen (130) bewegen,
- Einsetzen der zweiten Rollen (233) in die Montagesegmente (134), und
- weiteres Einführen des Staufachs (200), bis die ersten Rollen (231) in den ersten Führungssegmenten (131) angeordnet sind und die zweiten Rollen (231) in den zweiten Führungssegmenten (133) angeordnet sind.

13. Verfahren nach Anspruch 12, welches ferner den Schritt aufweist:
- Verschließen der Führungsschienen (130).

## Claims

1. A hatrack module comprising:
a housing (100) with a hatrack accommodation space (180), wherein a guide rail (130) is arranged on each of the sidewalls of the hatrack accommodation space, and
a hatrack (200) with laterally arranged first and second guide elements (231, 233), wherein the first and second guide elements of the hatrack comprise at least one first roller (231) and at least one second roller (233), with one of the at least one first roller and one of the at least one second roller arranged on each side of the hatrack, the first and second guide elements being engagable with the first and second guide rails, respectively,
wherein the guide rails are designed so that the hatrack can be moved between an open and a closed position along the guide rails and so that a manual force exerted by a passenger of an aircraft to activate the hatrack in the course of the movement path of the hatrack is reduced due to the weight force of the hatrack.

2. The hatrack module of claim 1, wherein the hatrack (200) is movable between an open and a closed position along the guide rails (130) at least in a section solely because of its own weight force.

3. The hatrack module of claim 1, wherein each of the guide rails (130) comprises a first guide segment (131) for guiding the first roller, a second guide segment (133) for guiding the second roller, a connection segment (132) between the first guide segment and the second guide segment, and an installation segment (134) for insertion of the rollers into the guide rail.

4. The hatrack module of claim 3, wherein the first rollers (231) are arranged to engage the first guide segments (131), and the second rollers (233) are arranged to engage the second guide segments (1339 when the hatrack (200) is installed in the housing (100).

5. The hatrack module of claim 1, further comprising a locking plug (120) for closing off one end of a guide rail (130).

6. The hatrack module of claim 1, further comprising a locking device for locking the hatrack (200) in a closed position in the housing (100).

7. The hatrack module of claim 1, wherein the movement path of the hatrack (200) is determined in such a manner that in any position of the hatrack between an open position and a closed position there is an essentially constant gap between an outside (210) of the hatrack and an edge of the housing (100).

8. The hatrack module of claim 1, wherein the hatrack module is configured to be integrated in a positive-locking manner in the lining of the interior of an aircraft.

9. The hatrack module of claim 1, further comprising a passenger service channel (160) and at least one passenger service unit (300), wherein the at least one passenger service unit (300) is an element selected from the group consisting of: an oxygen supply box, a loudspeaker, a headphone jack, a light, an air outlet for the air supply, a USB connector, a computer connector, and a panel.

10. Use of a hatrack module of any one of claims 1 to 9 in an airplane or in a vehicle.

11. An aircraft comprising a hatrack module of any one of claims 1 to 9.

12. A method for installing a hatrack module of of any one claims 3 to 9 in an aircraft, wherein the method comprises:
- attaching the housing (100) of the hatrack module to a structure (400) of the aircraft,
- inserting the first rollers (231) into the installation segments (134) of the guide rails (130),
- inserting the hatrack (200) into the hatrack accommodation space (180), wherein the first rollers (231) move along the guide rails (130),
- inserting the second rollers (233) into the installation segments (134), and
- further inserting the hatrack (200) until the first rollers (231) are arranged in the first guide segments (131), and the second rollers (231) are arranged in the second guide segments (133).

13. The method of claim 12, further comprising:
- locking the guide rails (130).

## Revendications

1. Module de compartiment de rangement comprenant:
un boîtier (100) ayant un espace de réception (180) du compartiment de rangement, dans lequel, sur les deux parois latérales de l'espace de réception du compartiment de stockage, dans chaque cas, un rail de guidage (130) est disposé, et
un compartiment de rangement (200) avec deux côtés et des éléments de guidage (231, 233) disposés sur ces côtés, dans lequel les éléments de guidage comprenant des premiers rouleaux (231) et des deuxièmes rouleaux (233), dans lequel à chacun des deux côtés du compartiment de rangement sont agencés un premier rouleau et un deuxième rouleau, qui peuvent s'engager avec l'un des rails de guidage (130),
dans lequel les rails de guidage étant chacun adapté de telle manière, que le compartiment de rangement peut être déplacé entre une position ouverte et une position fermée le long du rail de guidage et une force exercée par un passager pour actionner le compartiment de rangement pendant le chemin du déplacement du compartiment de rangement est réduite par le poids du compartiment de rangement.

2. Module de compartiment de rangement selon la revendication 1, dans lequel le compartiment de rangement (200) peut être déplacé entre une position ouverte et une position fermée le long des rails de guidage (130) au moins partiellement uniquement par de son propre poids.

3. Module de compartiment de rangement selon la revendication 1, dans lequel chaque rail de guidage comprend un premier segment de guidage (131) pour guidage du premier rouleau, un second segment de guidage (133) pour guidage du second rouleau, un segment de liaison entre le premier et le second segment de guidage et un segment de montage (134) pour insertion des rouleaux dans les rails de guidage.

4. Module de compartiment de rangement selon la revendication 3, dans lequel les premiers rouleaux (231) sont agencés de telle manière pour venir en prise avec les premiers segments de guidage (131) et les seconds rouleaux (233) sont agencés de telle manière pour venir en prise avec les seconds segments de guidage (133) quand le compartiment de rangement (200) est installé dans le boîtier (100).

5. Module de compartiment de rangement selon la revendication 1, comprenant en outre un bouchon de fermeture (120) adapté pour fermer une extrémité d'un rail de guidage (130).

6. Module de compartiment de rangement selon la revendication 1, comprenant en outre un verrou de sorte que le compartiment de stockage (200) peut être verrouillé dans une position fermée dans le boîtier (100).

7. Module de rangement selon la revendication 1, dans lequel le chemin de déplacement du compartiment de rangement (200) est déterminé de sorte que dans chaque position du compartiment de rangement entre une position ouverte et fermée, un espace sensiblement constant entre un coté extérieur (210) du compartiment de rangement et un bord du boîtier (100) est formé.

8. Module de compartiment de rangement selon la revendication 1, dans lequel le module de compartiment de rangement peut être intégré positivement dans le revêtement intérieur de l'aéronef.

9. Module de compartiment de rangement selon la revendication 1, comprenant en outre un canal d'alimentation de passager (160) et au moins un élément d'alimentation de passager (300), dans lequel le au moins un élément d'alimentation de passager est un groupe comprenant: boîtier d'alimentation d'oxygène, enceinte, prise casque, lumière, sortie d'air pour l'alimentation en air, prise USB, prise d'ordinateur et capot.

10. Utilisation d'un module de compartiment de rangement selon l'une des revendications 1 à 9 dans un aéronef ou un véhicule.

11. Aéronef avec un module de compartiment de rangement selon l'une des revendications 1 à 9.

12. Procédé d'installation d'un module de compartiment de rangement selon l'une des revendications 3 à 9 dans un aéronef, le procédé comprenant les étapes:
- Fixation du boîtier (100) du module de compartiment de rangement sur la structure (400) de l'aéronef,
Engagement des premiers rouleaux (231) dans les segments de montage (134) des rails de guidage (130),
Insertion du compartiment de rangement (200) dans l'espace de réception du compartiment de rangement (180), dans lequel les premiers rouleaux (231) se déplacent le long des rails de guidage (130),
Engagement des seconds rouleaux (233) dans les segments de montage (134) et l'insertion supplémentaire du compartiment de rangement (200) jusqu'à ce que les premiers rouleaux (231) sont disposés dans les premiers segments de guidage (131) et les seconds rouleaux (231) sont disposés dans les second segments de guidage (133).

13. Procédé selon la revendication 12, comprenant en outre l'étape de:
- Fermeture des rails de guidage (130).
